# EUROPEAN PATENT SPECIFICATION

(11) **EP 3 928 947 B1**
(45) Date of publication and mention of the grant of the patent: **26.07.2023**
(21) Application number: 21181861.2
(22) Date of filing: 25.06.2021
(51) Int. Cl.: B29C 45/00, H01R 43/18, B29L 31/36

(54) **LOW-WARPAGE INJECTION-MOLDED HOUSING PART AND ELECTRICAL CONNECTOR WITH SUCH A HOUSING PART**
SPRITZGEGOSSENES GEHÄUSETEIL MIT GERINGEM VERZUG UND ELEKTRISCHER VERBINDER MIT EINEM SOLCHEN GEHÄUSETEIL
PARTIE DE BOÎTIER MOULÉE PAR INJECTION À FAIBLE GAUCHISSEMENT ET CONNECTEUR ÉLECTRIQUE AVEC UNE TELLE PARTIE DE BOÎTIER

(30) Priority: 26.06.2020 DE 102020207977
(43) Date of publication of application: 29.12.2021
(73) Proprietor: TE Connectivity Germany GmbH, 64625 Bensheim (DE)
(72) Inventor: PANITZ, Gregor, 64625 Bensheim (DE)
(74) Representative: Grünecker Patent- und Rechtsanwälte PartG mbB

(56) References cited:
- DE-A1-102015 208 628
- US-A- 4 403 933
- US-A1- 2013 122 758
- US-A1- 2014 051 301
- US-A1- 2014 193 999
- US-A1- 2020 136 285

## Description

The present invention relates to a low-warpage injection-molded housing part, in particular a housing part injection-molded from fiber-reinforced plastic material, for example, but not exclusively, for an electrical connector. Furthermore, the present invention further relates to an electrical connector with such a housing part.

In modern technology, plastic injection-molded parts are used in countless applications, for example, in electrical engineering as housing parts for electrical connectors.

US 2014/051301 A1 relates to a method of forming a molded part by uni-directionally injecting a mold with material, removing the molded part from the mold, and forming at least one cavity in the molded part by a machining process separate from the molding process.

In order to improve the component stability, filler fibers are added during the production of the plastic melt.

US 2020/136285 A1 discloses an injection-molded housing of a board connector. Through a resin gate 100 molten resin is poured into a mold cavity forming the housing. The molten resin contains a fibrous filler, which due to an upward and downward flow of the molten resin is oriented in a vertical state in the housing.

US 2013/122758 A1 discloses a slim and long electrical connector with a housing. Interior walls of the housing are formed from a thermoplastic composition containing fibers.

US 4,403,933 describes an apparatus for injection-molding an insulating liner onto the surface of a metal spool. To carry out injection molding, the spool is supported within a mold which defines a liner cavity conforming to the inner surface of the spool. Thereafter, molding material including reinforcing fibers is injected into the mold.

This typically results in a direction-dependent mechanical behavior of the housing part. This so-called anisotropic material behavior is already noticeable during the cooling process of the housing part and causes, for example, undesired warpage of the housing part.

Depending on the extent of this warpage, the housing part can lose its suitability for the original purpose, since it does not meet the desired geometric specifications. The suitability of the housing part can possibly be restored, but only through subsequent measures and with correspondingly increased effort.

DE 10 2015 208 628 A1 relates to an injection-molded part for a connector as well as a method and a tool for producing such an injection-molded part. To reduce the cooling distortion of the molded part, a conformation is provided as a plate, which during the cooling step applies a counter-drafting force that counteracts the warping force of the remainder of the molded part.

US 2014/193999 A1 relates to a connector made of fiber reinforced resin. On a front surface of the connector, a warping prevention part is provided. In the warping prevention part, disorder is caused in the fiber orientation. A warpage force produced in the warping prevention part offsets a warpage force produced in the rest of the connector.

The present invention is based on the object of providing a solution which makes it possible to configure a housing part with low warpage and employ it for its original purpose without subsequent measures for correcting the warpage.

This object is achieved by a housing part that is injection-molded from a plastic material reinforced with fibers for an electrical connector, wherein the housing part comprises a base section with two oppositely disposed flat sides, wherein a housing section extends away from each flat side, wherein a main fiber orientation in the housing sections, which corresponds to a mean value of the orientation of the fibers in the respective housing section, is oriented away from the base section, wherein a housing section forms at least one mating face of said housing part, wherein the housing section opposite the at least one mating face comprises at least one rib, and wherein said at least one rib, in a rib cross section parallel to said flat sides of said base section, comprises at least one convex region and at least one concave region in order to reduce cooling-related warpage of the housing part.

The mean value for the main fiber orientation can be calculated, for example, as the arithmetic mean, geometric mean, root mean square, median or mean value of a statistical distribution. The main fiber orientation therefore describes how most of the fibers are aligned in the section of the housing part observed, and is there not to be understood as being directional or direction-related. A main fiber orientation oriented away from the base section is given, for example, when most of the fibers of the section observed are oriented in such a way that one fiber end is disposed farther away from the base section than the other fiber end.

The orientation of the fibers in the housing sections on two oppositely disposed sides of the housing part away from the base section makes selective use of the property of fiber-reinforced plastic materials, that they exhibit greater shrinkage due to the cooling transverse to the main fiber orientation than along the main fiber orientation. In particular, cooling-related shrinkage arises in the respective housing sections disposed oppositely to one another with respect to the base section, which shrinkage creates respective warpage stresses with a directional component running parallel to the base section. If arising by itself, such shrinkage would cause the housing part to warp. If the shrinkages arise together, however, warpage forces arise in the respective housing sections on two oppositely disposed sides of the housing part and cancel each other out or at least act against each other, so that the overall warpage of the housing part can be prevented or at least reduced even without subsequent measures for correcting the warpage.

In other words, the orientation of the fibers in the housing sections in the housing part according to the invention is used to selectively influence the warpage behavior of the entire housing part. In particular, for the purpose of compensating for warpage, a counter-warpage can therefore be created purely by orienting the fibers of one of the housing sections and it compensates or at least reduces the warpage in the other housing section.

This is particularly advantageous if one of the two housing sections is, for example, subject to a customer specification and therefore has to have a predefined geometry which, however, is inherently susceptible to warpage. In such a case, the respective other housing section can be used selectively to create the corresponding counter-warpage which prevents or at least minimizes the warpage of the overall housing part.

The invention can be further improved by the following embodiments which are advantageous by themselves and which can be arbitrarily combined with one another.

According to a possible embodiment, for example, glass fibers, mineral fibers, metal fibers and/or elongate metal particles as well as any other type of short fibers or long fibers can be used as fibers. Since the fibers are substantially aligned along the direction of flow of the plastic melt when the plastic melt is injected into a casting tool, except for locally limited turbulence and deflections near the interface, the main fiber orientation can already be set in the casting tool during a manufacturing process of the housing part by selectively passing the plastic melt through or redirecting it. This shall be explained in detail below.

Alternatively or additionally, in the case of metal fibers and/or metal particles, the main fiber orientation can be influenced by an external magnetic field and, in particular, an angle between the base section and the main fiber orientation can be set more precisely.

The angle between the base section and the main fiber orientation in the respective housing sections can be greater than 30°, in particular greater than 45°, preferably greater than 60°, depending on the expected warpage or required counter-warpage. In principle, the heuristic applies to a housing part according to the invention that the warpage stresses that occur are greater, the greater the angle between the base section and the main fiber orientation in the associated housing section. The angle between the base section and the fiber orientation can therefore already be used during the manufacturing process of the housing part as an adjustment parameter for reducing the cooling-related warpage of the housing part.

In a particularly preferred embodiment, the main fiber orientation of at least one housing section is transverse to the base section. Such an orientation is given where the angle between the base section and the main fiber orientation is 90° +/- 20° and allows the greatest possible counter-warpage to be created.

According to a further possible embodiment, the main fiber orientations in the housing sections can each be at different angles to the base section. By selectively orienting the fibers of the respective housing sections at different angles, the reduction of the cooling-related warpage of the housing part can be controlled more flexibly in dependence of the size of the respective housing section.

According to an exemplary embodiment, the housing sections can be of different sizes, wherein the main fiber orientation in the smaller housing section is more inclined with respect to the base section than the main fiber orientation in the larger housing section. Housing sections of different sizes are given where the housing sections have different volumes, cubatures and/or weight proportions. For example, at least one main geometric dimension of the larger housing section can be greater than a corresponding main geometric dimension of the smaller housing section. For example, a height perpendicular to the base section is greater in the larger housing section than in the smaller housing section.

According to the heuristic already mentioned, the cooling-related warpage stresses in this embodiment are stronger in the smaller housing section than in the larger housing section. Warpage forces of comparable magnitude arise across the volume of the respective housing sections. Since the housing sections are located on oppositely disposed flat sides of the base section, the warpage forces act in opposite direction to one another, so that compensation of the warpage forces arises. In particular, the warpage in the larger housing section can thus be compensated for by a selectively created counter-warpage in the smaller housing section.

In the case of housing parts with more than two housing sections, the main fiber orientations in smaller housing sections can accordingly be more inclined with respect to the base section than the main fiber orientations in larger housing sections.

Alternatively, the main fiber orientations of all housing sections are at the same angles to the base section. In this manner, the warpage forces can be compensated for particularly easily with housing sections of the same size.

According to a further possible embodiment, the fibers in the base section can exhibit a main fiber orientation which is transverse to the main fiber orientation of at least one housing section. With such a main fiber orientation, the base section does not contribute to the warpage of the housing part, since the warpage stresses respectively arising would also be transverse to one another and therefore in particular do not add up.

According to a further embodiment, the housing part can be configured to be elongate and a longest main dimension of the base section can run parallel to a longest main dimension of the housing part. The housing part is elongate if the longest spatial main dimension, e.g. the longest outer edge, of the housing part is, for example, at least many times greater than all of the remaining main dimensions of the housing part perpendicular thereto. The direction of the longest main dimension of the housing part can there define a longitudinal direction of the housing part.

This embodiment is advantageous because it allows the overall warpage to be prevented or minimized without subsequent measures, even in the case of elongate housing parts that are particularly susceptible to warpage. Elongate housing parts are particularly susceptible to warpage for the reason that, for example, comparatively small warpage in a central region of the elongate housing part can lead to comparatively large angular deviations in the end regions of the elongate housing part.

For improved force transmission between the housing sections, the housing sections can be integrally connected to one another via the base section, preferably in a continuously integral manner along the longitudinal direction of the housing part. Such integral connection is given where the housing sections are connected to the base section in a positive material-fit manner, in particular monolithically.

According to a further embodiment, the housing part can comprise at least one sprue point or synonymously gate mark on an outer surface of the housing part that extends perpendicular to the longest main dimension of the housing part. In particular, the sprue point can be located on an outer surface of the base section that extends perpendicular to the longitudinal direction of the housing part. With such a one-sided lateral arrangement of the at least one sprue point, the housing part can be produced with an optimal injection process without confluence points of the plastic melt.

The position of the at least one sprue point can be recognizable by a sprue bar or a defect on the housing part. Defects refer to, for example, visible discoloration, notches or bulges on the outer surface of the housing part. Such defects can arise, for example, when the sprue bar is severed after the housing part has cooled down.

To shorten the injection process and/or for extremely long main dimensions, the housing part can also have two sprue points, wherein the sprue points are arranged on outer surfaces that are disposed opposite one another with respect to the housing part, in particular on outer surfaces disposed opposite one another in the longitudinal direction.

According to a further possible embodiment, the base section can be configured in the form of a plate, preferably in the form of a continuous plate. In particular, the base section is formed by a base plate having apertures for electrical contacts. The apertures there connect the two flat sides of the base section and represent an easy-to-implement holder for electrical contacts, such as electrical contact elements.

Alternatively, the base section can also be formed by a ground plate, intermediate plate, or center plate of the housing part.

The base section can adjoin a base, i.e. a lowermost, rearmost, and/or deepest surface of the at least one mating face. The term mating face there describes a mechanical interface to a matching mating connector of the electrical connector.

This is advantageous because it allows for the prevention or at least the minimization of the cooling-related warpage in a housing part with a mating face, which typically has to meet particularly high requirements in terms of geometric dimensional accuracy.

Optionally, the housing section forming the at least one mating face can also form several mating faces, each of which shares a wall with at least one adjacent mating face. The resulting mating faces are then given a more stable shape that is less susceptible to warpage.

Alternatively, and if the shaping of the mating connector demands such, the several mating faces can also be distributed on the base section at a distance from one another.

The other housing section and/or the base section can form an adhesion collar to which adhesive can be applied in order to attach a further, for example, supplementary, housing cover of the electrical connector.

Optionally, the other housing section and/or the base section can also form a handle which provides a gripping surface that is spaced apart from the adhesion collar in order to prevent the adhesion collar from being soiled, e.g. by fingerprints caused by handling.

Additionally or alternatively, the other housing section can also form a wall which, for example, protects the electrical contacts from unintentional contact.

To stabilize the housing part, a housing section comprises the at least one rib, i.e. a rib-shaped wall section. The housing section disposed opposite the at least one mating face comprises the at least one rib. The housing part can thus be stabilized without influencing the geometry of the at least one mating face. This simplifies compliance with customer and/or normative specifications.

The at least one rib can be, for example, part of the adhesion collar or the wall. In particular, the at least one rib is integrally connected to the base section and extends along the base section in the longitudinal direction of the housing part. Optionally, multiple ribs can extend in this manner in parallel and spaced apart from one another.

The at least one convex region is a region of the rib cross-section, the outer contour of which is curved outwardly. Correspondingly, the outer contour of the rib cross section in the at least one concave region is curved inwardly. Transitions between these regions can extend in a step-like, ramp-shaped, or curved manner. Furthermore, the transitions can be angular or rounded. The rib cross section can be constant over a height of the at least one rib that is perpendicular to the base section.

As shall be described in detail below, the at least one convex region is suitable for creating a local counter-warpage, while the at least one concave region is used for a force-transmitting connection of the at least one convex region to the remainder of the wall and/or to further convex regions. In particular, in addition to passive stabilization of the housing part, the at least one rib with such a rib cross section as part of the wall can thus also be used for active warpage compensation. Due to this dual function, no additional structural measures are necessary on the housing part.

Simple implementation of the convex and concave regions of the rib cross section is possible in a further embodiment, according to which the at least one rib comprises at least one thicker rib segment and at least one thinner rib segment. The at least one thicker rib segment there corresponds to the at least one convex region of the rib cross-section. The at least one thinner rib segment in analogy corresponds to the at least one concave region of the rib cross-section.

According to a further embodiment, the at least one thicker rib segment and the at least one thinner rib segment can have their base in the base section. The rib segments are preferably connected in a positive material-fit manner to one another and to the base section, wherein a central axis of each rib segment runs perpendicular to the flat sides of the base section. There is thus a possibility of filling the rib segment, in particular the at least one thicker rib segment, with the plastic melt from the direction of the base section when the housing part is produced in the casting tool. According to the already explained tendency of fibers to align themselves in the direction of flow of the plastic melt, the main fiber orientation being directed away from the base section can thus be obtained. The exact circumstances and processes that enable or facilitate filling the thicker rib segments from the direction of the base section shall be further illustrated below by an exemplary description of the casting tool and a casting method.

According to a further possible embodiment of the housing part, the at least one rib can comprise a sequence of thicker rib segments and thinner rib segments. The sequence of the rib segments can there extend along the base section in the longitudinal direction of the housing part. In particular, the sequence can extend parallel to the main fiber orientation in the base section. In the case of a housing part with two sprue points, the sequence can extend parallel to the connecting line of the two sprue points.

This embodiment enables the rib segments to be distributed over the housing part. With uniform distribution of the rib segments, the counter-warpage created can also be distributed evenly over the housing part. Alternatively, the rib segments can also be distributed unevenly, for example confined only to regions of the housing part that are disposed opposite the mating faces, in order to focus the counter-warpage at these regions.

The thicker rib segments and the thinner rib segments of a rib can be arranged next to one another parallel to the flat sides of the base section. A thinner rib segment can be disposed between two adjacent thicker rib segments. A thicker rib segment can be disposed between two adjacent thinner rib segments. In particular, thicker and thinner rib segments can be arranged alternately. Since the rib segments are connected to one another as already described, force transmission can take place within the framework of warpage compensation within the rib along the longitudinal direction of the housing part, for example, over the entire length of the housing part.

The underlying object mentioned above can also be satisfied by an electrical connector with a housing part according to one of the preceding embodiments, wherein at least one electrical contact element is located in the base section of the housing part. Optionally, a plurality of electrical contact elements can be arranged, for example, in the apertures of the base section that is configured as a base plate. The base plate therefore serves as a contact carrier or contact holder. Due to the low-warpage configuration of the housing part already explained and the resulting compliance with the geometric dimensional accuracy, the electrical connector according to the invention can advantageously also be used for its original purpose without any subsequent measures correcting warpage.

To illustrate the relationship between the shaping of the at least one rib and the direction of flow of the plastic melt, an exemplary description of the casting tool and a casting method shall be given below.

The casting tool used preferably comprises at least three communicating cavities for injection-molding a housing part, wherein a first cavity forms a negative shape of the base section of the housing part, a second cavity next to it forms a negative shape of the housing section with the at least one mating face, and a third cavity on a side of the first cavity opposite the second cavity forms a negative shape of the housing section with the at least one rib. The casting tool also comprises a sprue channel which opens into the first cavity at the sprue point of the base section to be produced. The first, the second, and the third cavity can each have a longest main dimension that runs parallel to the sprue channel.

The third cavity also comprises at least one pair of chambers. The pair of chambers comprises a tapered chamber communicating with the first cavity for forming the at least one thinner rib segment as well as a widened chamber communicating with the first cavity and the tapered chamber for forming the at least one thicker rib segment. With the at least one pair of chambers, the tapered chamber is closer to the sprue channel than the widened chamber.

When the housing part is injection-molded, the plastic melt mixed with fibers is introduced via the sprue channel into the first cavity of the above casting tool. The plastic melt is then passed at least from a region of the first cavity close to the sprue into a region of the second and the third cavity close to the sprue. The flow fronts of the plastic melt spread out at the same speed at least in the regions of the first, the second, and the third cavities close to the sprue and fill the respective cavities along a direction that is oriented away from the sprue channel. In particular, the plastic melt is directed in the direction of the at least one tapered chamber of the third cavity.

In the at least one tapered chamber of the third cavity, the plastic melt now spreads in a slowed manner in the direction of the at least one widened chamber of the third cavity due to greater flow resistance, so that the flow front from the first cavity reaches the at least one widened chamber before all other flow fronts. As a result, the at least one widened chamber is filled with plastic melt from the first cavity.

In other words, the shaping of the housing part described above, in particular the shaping of the at least one rib, represents a possibility of selectively redirecting the direction of flow of the plastic melt during the manufacture of the housing part. Above all, the flow front in the third cavity is slowed down by the tapered chamber, so that it is overtaken by the flow front in the first cavity. The flow front in the first cavity is therefore redirected in part in the direction of the widened chamber and flows figuratively "around the corner". This creates a main fiber orientation in the housing section with the at least one rib, at least in the at least one thicker rib segment, which is oriented away from the base section.

Where there is a sequence of rib segments, this process is repeated again in the next pair of chambers. The shaping of the rib segments consequently forces repeated redirection of the plastic melt so that a direction of flow of the plastic melt and therefore an orientation of the fibers in the thicker rib segments comes about, which in a housing section with ribs not having thicker and thinner rib segments would not be oriented or not so much away from the base section.

In the thicker rib segments, i.e. in the convex regions of the rib cross-section, a respective selective counter-warpage is therefore triggered after the casting process and creates warpage forces that are transmitted via the thinner rib segments, i.e. the concave regions of the rib cross-section, and counteract the warpage in others sections of the housing part, for example, in the mating faces.

The invention shall be explained hereafter in more detail with reference to the drawings on the basis of several embodiments, the different features of which can be combined with one another as required in accordance with the above remarks.
- Fig. 1: shows a schematic perspective illustration of a housing part of the invention according to an exemplary embodiment;
- Fig. 2: shows a schematic plan view of a sectional illustration of the housing part according to the invention from Figure 1;
- Fig. 3: shows a schematic perspective illustration of an electrical connector of the invention according to an exemplary embodiment; and
- Fig. 4: shows a perspective detailed view of a of a schematic sectional illustration of a casting tool for producing the housing part according to the invention from Figure 1.

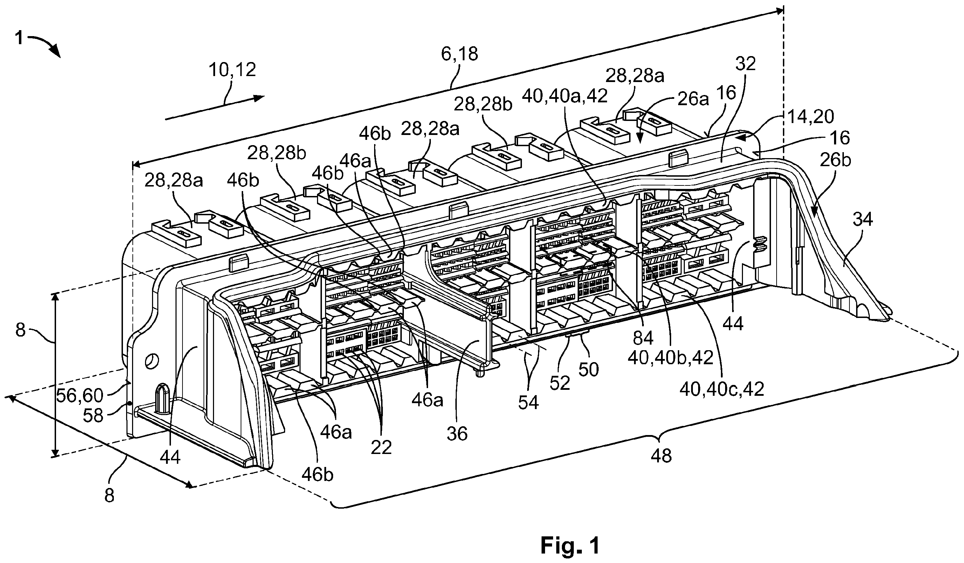

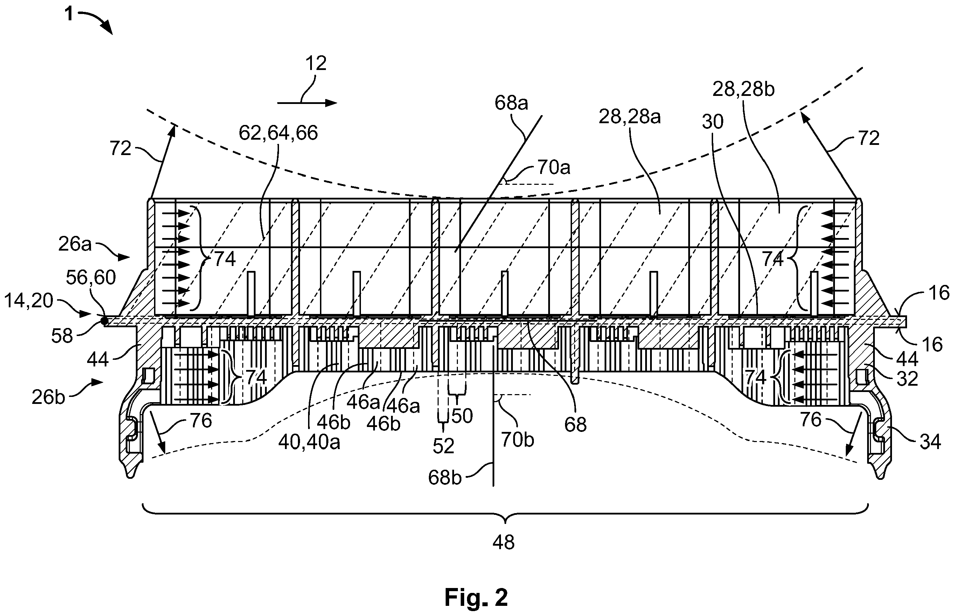

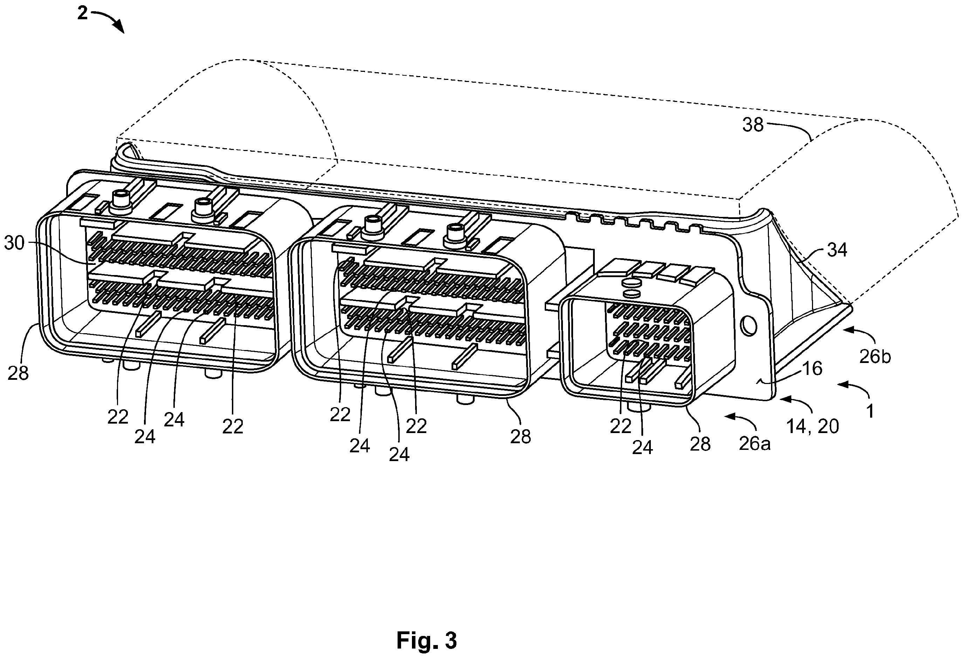

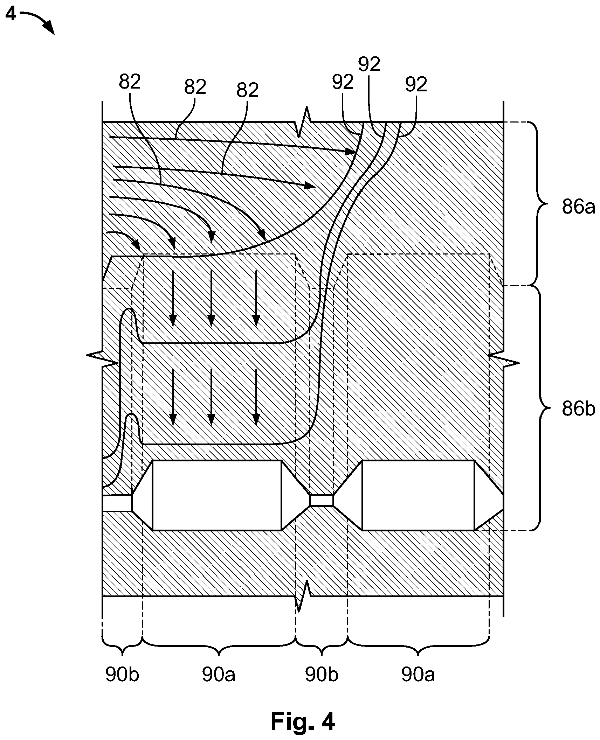

The schematic structure of a housing part 1 according to the invention shall first be explained in an exemplary embodiment with reference to Figures 1 and 2. The schematic structure of an electrical connector 2 according to the invention shall then briefly be described with reference to Figure 3. A local flow process in a casting tool 4 for producing housing part 1 according to the invention shall finally be explained with reference to Figure 4.

Housing part 1 can be injection-molded from plastic material reinforced with fibers and, as shown in Figure 1, be elongate. In other words, the longest spatial main dimension 6 of housing part 1 can be many times larger than all of the remaining main dimensions 8 of housing part 1 that are perpendicular thererto. The direction 10 of the longest main dimension 6 of housing part 1 there defines a longitudinal direction 12 used only to better understand the following description.

Housing part 1 comprises a base section 14 with two oppositely disposed flat sides 16, wherein a longest main dimension 18 of base section 14 extends parallel to the longest main dimension 6 of housing part 1. Base section 14 therefore extends longitudinally in housing part 1.

As shown in Figure 1, base section 14 can be continuously plate-shaped and in particular be shaped by a base plate 20 with apertures 22 for electrical contact elements 24 (see Figure 3). Alternatively, base section 14 can also be formed by a ground plate, intermediate plate, or center plate of housing part 1.

From each flat side 16 of base section 14, a housing section 26a, 26b can extend away. Housing sections 26a, 26b can be integrally connected to one another continuously along longitudinal direction 12 via base section 14. This is illustrated in Figures 1 and 2.

Housing section 26a can form at least one mating face 28, i.e. a mechanical interface between housing part 1 and a matching mating connector (not shown) of electrical connector 2. Base section 14 adjoins a base 30 of the at least one mating face 28. As shown by way of example in Figure 1, housing section 26a can form multiple uniform mating faces 28a which share a wall with at least one adjacent mating face 28b of the same size. If necessary, mating faces 28a, 28b can also be spaced apart from one another and/or have different shapes or sizes (see Figure 3).

As shown in Figure 1, the other housing section 26b can form a circumferential wall 32 and a circumferential adhesion collar 34. If necessary, housing section 26b can also form a handle 36 which is spaced apart from adhesion collar 34. Adhesion collar 34 can be used to apply adhesive and attach a supplementary housing cover 38 (see Figure 3) of electrical connector 2.

Furthermore, housing section 26b can comprise at least one rib 40, i.e. a rib-shaped wall section 42 which is connected integrally to base section 14 and extends along base section 14 in longitudinal direction 12. In the embodiment shown in Figure 1, three such ribs 40a, 40b, 40c are present by way of example. Two of ribs 40a, 40c shown are part of wall 32. The remaining rib 40b internally connects sides 44 of wall 32 that are oppositely disposed in longitudinal direction 12.

In addition, it can be seen from Figure 1 that ribs 40a, 40b, 40c can each comprise a sequence of thicker rib segments 46a and thinner rib segments 46b. The sequence there runs along base section 14 in longitudinal direction 12, wherein rib segments 46a, 46b are arranged adjacently, parallel to flat sides 16 of base section 14. In particular, rib segments 46a, 46b are distributed evenly over a region 48 of housing section 26b that is disposed opposite to uniform mating faces 28. Alternatively, rib segments 46a, 46b can also be distributed differently, in particular irregularly, for example, in the case of non-uniform mating faces (see Figure 3).

A thinner rib segment 46b is respectively disposed between two adjacent thicker rib segments 46a, while a thicker rib segment 46a is disposed between two adjacent thinner rib segments 46b. In particular, thicker rib segments 46a and thinner rib segments 46b are arranged alternately in the sequence.

Due to the sequence of rib segments 46a, 46b, convex regions 50 and concave regions 52 arise in respective ribs 40a, 40b, 40c in a rib cross section parallel to flat sides 16 of base section 14. In convex regions 50, the rib cross section has a contour that is curved outwardly. Correspondingly, in the concave region, the outer contour of the rib cross section is curved inwardly.

The transitions between convex and concave regions 50, 52 are angular and ramp-shaped, as shown by way of example in Figure 1. Alternatively, the transitions can also be step-like, curved, and/or rounded. Resulting rib cross section can be constant over a height of respective ribs 40a, 40b, 40c that is perpendicular to base section 14.

As is also shown in Figure 1, thicker rib segments 46a and thinner rib segments 46b are connected to one another and to base section 14 in a positive material-fit manner so that rib segments 46a, 46b have their base in base section 14. A central axis 54 of each rib segment 46a, 46b runs perpendicular to flat sides 16 of base section 14.

In addition, Figure 1 shows that housing part 1 can comprise at least one sprue point 58 on an outer surface 56 of housing part 1 extending perpendicular to longitudinal direction 12. In particular, sprue point 58 can be located on an outer surface 60 of base section 14 that runs perpendicular to longitudinal direction 12. The position of the at least one sprue point 58 can be recognizable by a sprue bar (not shown) or a defect on housing part 1. The defect can be, for example, a visible discoloration, notch, or bulge on outer surface 56 of housing part 1.

In other embodiments, not shown, housing part 1 can also comprise two sprue points which are preferably arranged on outer surfaces 56 of housing part 1 that are disposed opposite in longitudinal direction 12 with respect to housing part 1.

Figure 2 indicates by dotted lines 62 that fibers 64 in sections 14, 26a, 26b of housing part 1 can each have orientations 66, the mean values of which result in certain main fiber orientations 68, 68a, 68b. In particular, main fiber orientations 68a, 68b in housing sections 26a, 26b are each oriented away from base section 14, wherein respective main fiber orientations 68a, 68b are at different angles 70a, 70b to base section 14.

Main fiber orientation 68a in housing section 26a arises inevitably, for example, in the course of a manufacturing process for housing part 1 due to a geometry of mating faces 28 that is subject to customer and/or normative specifications.

More precisely, in the course of the production of housing part 1, the geometry of mating faces 28 can lead to flow paths in casting tool 4 which, in combination with the tendency of fibers 64 to align themselves in the flow direction 82 (see Figure 4) of a plastic melt during the casting process, results in in main fiber orientation 68a in housing section 26a being oriented away from base section 14. On its own, predominant main fiber orientation 68a in housing section 26a would lead to warpage forces 72 during a cooling down process of housing part 1, since fiber-reinforced plastic materials basically shrink more transverse to orientation 66 of fibers 64 and resulting warpage stresses 74 would act only on one side of housing part 1. Warpage stresses 74 are there more pronounced, the greater angle 70a is between main fiber orientation 68a and base section 14.

To compensate for these warpage forces 72, main fiber orientation 68b in housing section 26b is likewise oriented away from base section 14. Cooling-related warpage stresses 74 therefore also arise in housing section 26b and cause counter-warpage forces 76. Counter-warpage forces 76 are given in a direction opposite to warpage forces 72 and preferably cancel them out, so that no or only minimal warpage arises on housing part 1 after the cooling down process.

In the exemplary embodiment shown, housing sections 26a, 26b are of different sizes. In particular, housing section 26a with mating faces 28 has a larger volume than housing section 26b with ribs 40a, 40b, 40c. Main fiber orientations 68b in smaller housing section 26b is more inclined with respect to base section 14 than main fiber orientations 68a in larger housing section 26a. This means that angle 70b is greater than angle 70a. Cooling-related warpage stresses 74 are therefore greater in smaller housing section 26b than in larger housing section 26a. Warpage forces 72 or counter-warpage forces 76 of comparable size and opposite orientation arise over the volume of respective housing sections 26a, 26b. As a result, a force compensation arises and housing part 1 can be manufactured without or with minimal warpage and without subsequent measures to correct warpage.

In the case of housing parts with housing sections of the same size, the main fiber orientations of all housing sections can also be at the same angles to base section 14. Main fiber orientation 68 in base section 14 can be transverse to main fiber orientation 68b of housing section 26b.

Figure 3 shows a possible embodiment of electrical connector 2 according to the invention in a perspective view. Electrical connector 2 comprises a housing part 1 according to one of the preceding embodiments, wherein at least one electrical contact element 24 is disposed in base section 14 of housing part 1. In particular, a plurality of electrical contact elements 24 is arranged in apertures 22 of base section 14 that is configured as a base plate 20. Electrical contact elements 24 protrude at least on a flat side 16 of base section 14 into mating faces 28 of housing section 26a. Mating faces 28 are each spaced apart from one another and in part have different shapes or sizes.

The relationship between the shaping of the at least one rib 40 and flow direction 82 of the plastic melt during the injection-molding of housing part 1 shall be described below with reference to Figure 4. For this purpose, Figure 4 shows a section of a greatly simplified perspective sectional illustration of a casting tool 4 for manufacturing housing part 1 according to the invention. The section of casting tool 4 shown could form, for example, region 84 of rib 40b of housing part 1 marked with a dashed box in Figure 1. In the detail shown, parts of a cavity 86a forming base section 14 of housing part 1 and a cavity 86b forming housing section 26b are respectively shown.

Cavity 86b comprises in particular chambers 90a, 90b that are in communication with one another and with cavity 86a. Chambers 90a are widened and serve to shape thicker rib segments 46a of the at least one rib 40 of housing part 1. Chambers 90b are in turn tapered and accordingly serve to shape thinner rib segments 46b of the at least one rib 40 of housing part 1.

In addition, successive snapshots of a flow front 92 of the plastic melt delivered into casting tool 4 are shown in Figure 4. When casting tool 4 is filled with the plastic melt via sprue point 58 shown in Figure 1, flow front 92 flows mainly on the left-hand side into the section shown in Figure 4. Since the plastic melt spreads in a slowed manner in tapered chambers 90b due to stronger flow resistance, flow front 92 from cavity 86a reaches respective widened chambers 90a before flow front 92 arriving from tapered chambers 90b. A local redirection of flow direction 82 therefor occurs which causes that, during injection molding, in particular widened chambers 90a are filled with plastic melt from the direction of cavity 86a forming base section 14. In combination with the already mentioned tendency of fibers 64 to align themselves in flow direction 82 of the plastic melt during the casting process, this has the consequence that fibers 64 in thicker rib segments 46a of the at least one rib 40 align themselves oriented away from base section 14. With a sufficient number and/or sufficient total volume of thicker rib segments 46a, according to the mean value calculation, this leads to desired main fiber orientations 68b in housing section 26b oriented away from base section 14 (see Figure 2).

### Reference numerals

- 1: housing part
- 2: connector
- 4: casting tool
- 6: main dimension
- 8: main dimension
- 10: direction
- 12: longitudinal direction
- 14: base section
- 16: flat side
- 18: main dimension
- 20: base plate
- 22: aperture
- 24: contact element
- 26a, 26b: housing section
- 28, 28a, 28b: mating face
- 30: base
- 32: wall
- 34: adhesion collar
- 36: handle
- 38: housing cover
- 40, 40a, 40b, 40c: rib
- 42: rib-shaped wall section
- 44: side
- 46a, 46b: rib segment
- 48: region
- 50: region
- 52: region
- 54: central axis
- 56: outer surface
- 58: sprue point
- 60: outer surface
- 62: dotted line
- 64: fiber
- 66: orientation
- 68, 96a, 96b: main fiber orientation
- 70a, 70b: angle
- 72: warpage force
- 74: warpage stress
- 76: counter-warpage force
- 82: direction of flow
- 84: region
- 86a, 86b: cavity
- 90a, 90b: chamber
- 92: flow front

## Claims

1. Housing part (1) that is injection-molded from a plastic material reinforced with fibers (64) for an electrical connector (2), wherein said housing part (1) comprises a base section (14) with two oppositely disposed flat sides (16), wherein a housing section (26a, 26b) extends away from each flat side (16), wherein a main fiber orientation (68a, 68b) in said housing sections (26a, 26b), which corresponds to a mean value of the orientation (66) of said fibers (64) in said respective housing section (26a, 26b), is respectively oriented away from said base section (14), **characterized in that** a housing section (26a) forms at least one mating face (28) of said housing part (1), wherein the housing section (26b) opposite the at least one mating face (28) comprises at least one rib (40), and wherein said at least one rib (40), in a rib cross section parallel to said flat sides (16) of said base section (14), comprises at least one convex region (50) and at least one concave region (52).

2. Housing part (1) according to claim 1, wherein said main fiber orientations (68a, 68b) in said housing sections (26a, 26b) are each at different angles (70a, 70b) to said base section (14).

3. Housing part (1) according to claim 1 or 2, wherein said housing sections (26a, 26b) are of different sizes, and wherein said main fiber orientation (68b) in the smaller housing section (26b) is more inclined relative to said base section (14) than said main fiber orientation (68a) in the larger housing section (26a).

4. Housing part (1) according to one of the claims 1 to 3, wherein the fibers (64) in said base section (14) exhibit a main fiber orientation (68) which is transverse to said main fiber orientation (68b) of at least one housing section (26b).

5. Housing part (1) according to one of the claims 1 to 4, wherein said housing part (1) is configured to be elongate and a longest main dimension (18) of said base section (14) runs parallel to a longest main dimension (6) of said housing part (1).

6. Housing part (1) according to claim 5, wherein said housing part (1) comprises on an outer surface (56) of said housing part (1) that extends perpendicular to said longest main dimension (6) of said housing part (1) at least one sprue point (58).

7. Housing part (1) according to one of the claims 1 to 6, wherein said base section (14) is formed by a base plate (20) with apertures (22) for electrical contact elements (24).

8. Housing part (1) according to claim 1, wherein said at least one rib (40) comprises at least one thicker rib segment (46a) and at least one thinner rib segment (46b).

9. Housing part (1) according to claim 8, wherein said at least one thicker rib segment (46a) and said at least one thinner rib segment (46b) have their base in said base section (14).

10. Housing part (1) according to claim 8 or 9, wherein said at least one rib (40) comprises a sequence of thicker rib segments (46a) and thinner rib segments (46b).

11. Housing part (1) according to claim 10, wherein said thicker rib segments (46a) and thinner rib segments (46b) are arranged parallel to said flat sides (16) of said base section (14) next to one another.

12. Electrical connector (2) with a housing part (1) according to one of the claims 1 to 11, wherein at least one electrical contact element (24) is disposed in said base section (14).

## Patentansprüche

1. Gehäuseteil (1) für einen elektrischen Verbinder (2), das aus einem mit Fasern (64) verstärkten Kunststoffmaterial spritzgegossen wird, wobei das Gehäuseteil (1) einen Basisabschnitt (14) mit zwei gegenüberliegend angeordneten flachen Seiten (16) umfasst, sich ein Gehäuseabschnitt (26a, 26b) von jeder flachen Seite (16) weg erstreckt, eine Haupt-Faserausrichtung (68a, 68b) in den Gehäuseabschnitten (26a, 26b), die einem Mittelwert der Ausrichtung (66) der Fasern (64) in dem jeweiligen Gehäuseabschnitt (26a, 26b) entspricht, jeweils von dem Basisabschnitt (14) weg ausgerichtet ist,
**dadurch gekennzeichnet, dass**
ein Gehäuseabschnitt (26a) wenigstens eine Gegenfläche (28) des Gehäuseteils (1) bildet, der Gehäuseabschnitt (26b), der der wenigstens einen Gegenfläche (28) gegenüberliegt, wenigstens eine Rippe (40) umfasst, und wobei die wenigstens eine Rippe (40) in einem Rippen-Querschnitt parallel zu den flachen Seiten (16) des Basisabschnitts (14) wenigstens einen konvexen Bereich (50) und wenigstens einen konkaven Bereich (52) umfasst.

2. Gehäuseteil (1) nach Anspruch 1, wobei die Haupt-Faserausrichtungen (68a, 68b) in den Gehäuseabschnitten (26a, 26b) jeweils in unterschiedlichen Winkeln (70a, 70b) zu dem Basisabschnitt (14) liegen.

3. Gehäuseteil (1) nach Anspruch 1 oder 2, wobei die Gehäuseabschnitte (26a, 26b) unterschiedlich groß sind und die Haupt-Faserausrichtung (68b) in dem kleineren Gehäuseabschnitt (26b) relativ zu dem Basisabschnitt (14) stärker geneigt ist als die Haupt-Faserausrichtung (68a) in dem größeren Gehäuseabschnitt (26a).

4. Gehäuseteil (1) nach einem der Ansprüche 1 bis 3, wobei die Fasern (64) in dem Basisabschnitt (14) eine Haupt-Faserausrichtung (68) aufweisen, die quer zu der Haupt-Faserausrichtung (68b) wenigstens eines Gehäuseabschnitts (26b) ist.

5. Gehäuseteil (1) nach einem der Ansprüche 1 bis 4, wobei der Gehäuseteil (1) länglich ausgeführt ist und eine längste Hauptabmessung (18) des Basisabschnitts (14) parallel zu einer längsten Hauptabmessung (6) des Gehäuseteils (1) verläuft.

6. Gehäuseteil (1), nach Anspruch 5, wobei der Gehäuseteil (1) an einer Außenfläche (56) des Gehäuseteils (1), die sich senkrecht zu der längsten Hauptabmessung (6) des Gehäuseteils (1) erstreckt, wenigstens einen Angusspunkt (58) umfasst.

7. Gehäuseteil (1) nach einem der Ansprüche 1 bis 6, wobei der Basisabschnitt (14) durch eine Grundplatte (20) mit Öffnungen (22) für elektrische Kontaktelemente (24) gebildet wird.

8. Gehäuseteil (1) nach Anspruch 1, wobei die wenigstens eine Rippe (40) wenigstens ein dickeres Rippensegment (46a) und wenigstens ein dünneres Rippensegment (46b) umfasst.

9. Gehäuseteil (1) nach Anspruch 8, wobei das wenigstens eine dickere Rippensegment (46a) und das wenigstens eine dünnere Rippensegment (46b) ihre Basis in dem Basisabschnitt (14) haben.

10. Gehäuseteil (1) nach Anspruch 8 oder 9, wobei die wenigstens eine Rippe (40) eine Abfolge dickerer Rippensegmente (46a) und dünnerer Rippensegmente (46b) umfasst.

11. Gehäuseteil (1) nach Anspruch 10, wobei die dickeren Rippensegmente (46a) und die dünneren Rippensegmente (46b) parallel zu den flachen Seiten (16) des Basisabschnitts (14) nebeneinander angeordnet sind.

12. Elektrischer Verbinder (2) mit einem Gehäuseteil (1) nach einem der Ansprüche 1 bis 11, wobei wenigstens ein elektrisches Kontaktelement (24) in dem Basisabschnitt (14) angeordnet ist.

## Revendications

1. Élément de boîtier (1) moulé par injection à partir d'un matériau plastique renforcé de fibres (64), destiné à un connecteur électrique (2), ledit élément de boîtier (1) comprenant une section de base (14) comportant deux côtés plats (16) disposés pour être opposés, une section de boîtier (26a, 26b) s'étendant à distance de chaque côté plat (16), l'orientation principale des fibres (68a, 68b) dans lesdites sections de boîtier (26a, 26b), laquelle correspond à la valeur moyenne de l'orientation (66) desdites fibres (64) dans ladite section respective de boîtier (26a, 26b) est orientée respectivement à distance de ladite section de base (14), **caractérisé en ce que** :
une section de boîtier (26a) forme au moins une face conjuguée (28) dudit élément de boîtier (1), la section de boîtier (26b) opposée au moins à la face conjuguée (28) comprenant au moins une nervure (40), et ladite ou lesdites nervures (40), dans une section transversale à la nervure parallèle aux dits côtés plats (16) de ladite section de base (14), comprenant au moins une zone convexe (50) et au moins une zone concave (52).

2. Élément de boîtier (1) selon la revendication 1, dans lequel lesdites orientations principales des fibres (68a, 68b) dans lesdites sections de boîtier (26a, 26b) se trouvent chacune à des angles (70a, 70b) différents par rapport à ladite section de base (14).

3. Élément de boîtier (1) selon la revendication 1 ou la revendication 2, dans lequel lesdites sections de boîtier (26a, 26b) sont de tailles différentes, et où ladite orientation principale des fibres (68a, 68b) dans la section de boîtier (26b) la plus petite est plus inclinée par rapport à ladite section de base (14) que ladite orientation principale des fibres (68a) dans la section de boîtier (26a) la plus grande.

4. Élément de boîtier (1) selon l'une des revendications 1 à 3, dans lequel les fibres (64) dans ladite section de base (14) présente une orientation principale de fibres (68) transversale à ladite orientation principale des fibres (68b) d'au moins une section de boîtier (26b).

5. Élément de boîtier (1) selon l'une des revendications 1 à 4, ledit élément de boîtier (1) étant configuré pour être allongé, et où la dimension principale la plus longue (18) de ladite section de base (14) s'étend parallèlement à la dimension principale la plus longue (6) dudit élément de boîtier (1).

6. Élément de boîtier (1) selon la revendication 5, ledit élément de boîtier (1) comprenant au moins un point de coulée (58) sur une surface externe (56) dudit élément de boîtier (1) qui s'étend perpendiculairement à ladite dimension principale la plus longue (6) dudit élément de boîtier (1).

7. Élément de boîtier (1) selon l'une des revendications 1 à 6, dans lequel ladite section de base (14) est formée d'une plaque de base (20) comportant des ouvertures (22) destinées à des éléments de contact électrique (24).

8. Élément de boîtier (1) selon la revendication 1, dans lequel ladite ou lesdites nervures (40) comprennent au moins un segment de nervure (46a) plus épais et au moins un segment de nervure (46b) plus fin.

9. Élément de boîtier (1) selon la revendication 8, dans lequel la base dudit ou desdits segments de nervure (46a) plus épais et dudit ou desdits segments de nervure (46b) plus fins se trouve dans ladite section de base (14).

10. Élément de boîtier (1) selon la revendication 8 ou la revendication 9, dans lequel ladite ou lesdites nervures (40) comprennent une suite de segments de nervure (46a) plus épais et de segments de nervure (46b) plus fins.

11. Élément de boîtier (1) selon la revendication 10, dans lequel lesdits segments de nervure (46a) plus épais et lesdits segments de nervure (46b) plus fins sont disposés l'un à côté de l'autre parallèlement aux dits côtés plats (16) de ladite section de base (14).

12. Connecteur électrique (2) comportant un élément de boîtier (1) conforme à l'une des revendications 1 à 11, dans lequel au moins un élément de contact électrique (24) est disposé dans ladite section de base (14).
